# FASCICULE DE BREVET EUROPEEN

(11) **EP 1 365 362 B1**
(45) Date de publication et mention de la délivrance du brevet: **26.07.2006**
(21) Numéro de dépôt: 02076877.6
(22) Date de dépôt: 15.05.2002
(51) Int. Cl.: G07F 7/10, G06K 19/07

(54) **Système d'identification électronique sans contact**
Kontaktloses elektronisches Identifikationssystem
Contactless electronic identification system

(43) Date de publication de la demande: 26.11.2003
(73) Titulaire: Omega Electronics S.A., 2500 Bienne (CH)
(72) Inventeur: Kayal, Abdul-Hamid, 2000 Neuch tel (CH); Rais, Jean-Claude, 2800 Del-mont (CH)
(74) Mandataire: Laurent, Jean

(56) Documents cités:
- EP-A- 0 949 595
- WO-A-01/16865
- WO-A-98/52160
- WO-A-99/52065

## Description

La présente invention se rapporte de manière générale à un système d'identification électronique sans contact, communément connu par la dénomination "système RFID" (Radio Frequency Identification) ou "système CID" (Contactless Identification). Plus spécifiquement, la présente invention concerne un tel système d'identification sans contact employant des supports d'information, ou transpondeurs, agencés pour fonctionner avec plusieurs applications.

Des systèmes électroniques d'identification sans contact sont utilisés dans des applications variées, notamment comme systèmes d'identification et d'autorisation d'accès pour des applications de contrôle d'entrée, de gestion de temps ou d'abonnement, ou comme systèmes d'accès à des services payants (pré- ou post-paiement) pour des applications de type caisse ou automate.

Typiquement, pour chaque application, un système d'identification distinct est utilisé. Un tel système comporte typiquement (i) des supports d'information, ou transpondeurs, portés par les utilisateurs et se présentant généralement sous la forme de cartes ou de composants électroniques intégrés à des objets portatifs telles des montres, (ii) des unités de lecture dispersées sur les différents sites d'accès (par exemple aux diverses entrées d'un bâtiment dont l'accès est réglementé) ou aux postes de paiement, et (iii) au moins une unité de programmation permettant de configurer les divers transpondeurs pour l'application concernée.

Ainsi, un utilisateur désireux d'accéder à plusieurs applications diverses devra typiquement s'équiper de plusieurs supports d'identification adaptés à chaque application. Ceci a pour conséquence une multiplication inutile et inappropriée des transpondeurs nécessaires et peut par ailleurs conduire à un risque de confusion pour l'utilisateur ou de perte d'un ou plusieurs transpondeurs, perte qui peut bien évidemment être dommageable pour l'utilisateur.

Il est ainsi souhaitable de proposer un système d'identification permettant notamment de répondre aux problèmes susmentionnés, à savoir un système d'identification multi-applications ne nécessitant, pour un utilisateur donné, qu'un unique transpondeur pour accéder à plusieurs applications distinctes.

Un tel système d'identification électronique multi-applications ainsi qu'un transpondeur susceptible d'opérer avec plusieurs applications distinctes sont déjà proposés dans le document WO 97/34265. Le transpondeur utilisé dans ce système d'identification comporte notamment des moyens de mémorisation comprenant un espace mémoire segmenté pour accueillir des données d'application relatives à une pluralité d'application distinctes. Plus spécifiquement chaque segment mémoire comprend une identification de segment ou étiquette permettant d'identifier à quelle application se rapportent les données d'application contenues dans le segment mémoire concerné. Cette étiquette, ou "stamp", est formée d'une séquence identifiant l'application concernée et qui est fonction du niveau d'organisation de cette application dans un système d'autorisation hiérarchique.

Un autre système d'identification électronique multi-applications est également proposé dans la demande internationale No. PCT/CH 01/00629 du 23.10.2001 (bénéficiant d'une date de priorité du 23.10.2000) intitulée « Système d'identification électronique sans contact », au nom du présent Déposant et portant le numéro de publication WO 02/35464. Ce document publié le 02.05.2002 propose en particulier un tel système d'identification électronique multi-applications assurant un haut degré de sécurité. Les moyens mis en oeuvre pour assurer la sécurité des échanges de données entre les unités de lecture et transpondeurs de ce système seront en particulier avantageusement appliqués dans le cadre de la présente invention.

La demande européenne EP-A-0949595 divulgue un troisiéme exemple de systéme d'identification multi-application.

Une limitation des systèmes d'identifications multi-applications susmentionnés réside dans la capacité mémoire relativement limitée des transpondeurs. Il est bien évidemment possible d'équiper ces transpondeurs de moyens de mémorisation de grande capacité, toutefois ceci a pour conséquence une augmentation du coût de revient de ces transpondeurs. Il est en particulier préférable de maintenir les coûts de fabrication de ces transpondeurs aussi bas que possible, étant donné que ces transpondeurs sont typiquement destinés à une vaste distribution.

Un but général de la présente invention est ainsi de proposer un système d'identification électronique sans contact permettant notamment de répondre aux problèmes susmentionnés, à savoir un système d'identification multi-applications permettant de maintenir les coûts de fabrication des transpondeurs à un niveau aussi bas que possible.

Un autre but de la présente invention est de proposer un tel système d'identification électronique sans contact multi-applications qui présente une grande flexibilité d'utilisation pour l'utilisateur, sans limiter le nombre d'applications à la capacité mémoire restreinte du transpondeur.

La présente invention a ainsi pour objet un système d'identification électronique sans contact dont les caractéristiques sont énoncées dans la revendication 1, à savoir un système d'identification électronique sans contact comprenant au moins une unité de lecture et au moins un support d'information ou transpondeur susceptible d'être interrogé par ladite unité de lecture, ce transpondeur comportant des moyens de mémorisation comprenant un espace mémoire segmenté pour accueillir des données d'application relatives à une pluralité d'application distinctes. Selon l'invention, l'unité de lecture comprend des moyens pour décharger temporairement des données d'application propres à au moins une première application mémorisées dans ledit espace mémoire du transpondeur afin de libérer au moins une partie dudit espace mémoire et pour charger temporairement dans ladite partie libérée dudit espace mémoire du transpondeur, d'autres données d'application propres à au moins une seconde application.

La présente invention a également pour objet une méthode de gestion de données mémorisées dans un transpondeur dont les caractéristiques sont énoncées dans la revendication 10, à savoir une méthode de gestion des données dans un système d'identification électronique sans contact du type susmentionné, cette méthode comprenant les étapes suivantes :
- décharger temporairement des données d'application propres à au moins une première application mémorisées dans ledit espace mémoire du transpondeur afin de libérer au moins une partie dudit espace mémoire ; et
- charger temporairement dans ladite partie libérée dudit espace mémoire du transpondeur, d'autres données d'application propres à au moins une seconde application.

Des modes de réalisation avantageux de la présente invention font l'objet des revendications dépendantes.

En particulier, afin d'assurer un haut degré de sécurité, il est optionnellement prévu d'enregistrer, dans l'unité de lecture et/ou dans les moyens de mémorisation du transpondeur, un identificateur d'état indiquant qu'un transfert temporaire de données d'application a été effectué, cet identificateur d'état étant modifié lors de chaque échange de données d'application entre l'unité de lecture et le transpondeur. Préférablement, cet identificateur d'état est au moins enregistré dans l'unité de lecture et comporte au moins une indication d'un numéro d'identification du transpondeur avec lequel les données d'application ont été échangées ainsi qu'une indication temporelle de l'instant où ces données d'application ont été échangées.

Dans le cadre d'un exemple d'application non limitatif, l'échange temporaire de données d'application peut être opéré préalablement à une entrée du transpondeur dans un espace délimité, par exemple un espace de loisir délimité (piscine, domaine skiable, parc d'attraction, etc.), un espace culturel (musée, lieu archéologique, etc.) ou tout autre espace délimité où l'on désire offrir aux clients ou visiteurs un ensemble de services (payants ou non) relatifs au lieu visité. Dans cet exemple d'application, la gestion des données d'application pourrait être effectuée de manière parfaitement invisible pour l'utilisateur ou éventuellement avec son autorisation préalable.

Dans le cadre d'un autre exemple d'application, l'invention peut être appliquée à l'accès, libre ou payant, à des informations stockées sur un réseau local ou étendu, tel internet.

Dans le cadre d'encore un autre exemple d'application, l'échange temporaire de données d'application peut être opéré par l'utilisateur ou porteur du transpondeur (par exemple au moyen d'un terminal informatique personnel équipé d'une unité de lecture appropriée). Dans cet exemple d'application, l'utilisateur a l'entière maîtrise de son « portefeuille » d'applications, celui-ci sélectionnant les applications appropriées en fonction de ses besoins.

Par extension, et avantageusement, les données d'application temporairement déchargées d'un transpondeur peuvent être enregistrées sur un serveur auquel est connectée l'unité de lecture via un réseau informatique local ou étendu. Ceci a pour avantage de permettre une centralisation de la gestion de données d'application et notamment assurer que ces données ne puissent être perdues par inadvertance. On réalise de la sorte une banque de données centralisée accessible via un réseau local ou étendu (par exemple internet) qui équivaut en quelque sorte à une banque virtuelles de valeurs.

De préférence, comme déjà mentionné plus haut, l'échange des données d'application peut être opéré selon les principes énoncés dans la demande internationale No. WO 02/35464 au nom du présent Déposant. Un haut degré de sécurité est en effet assuré par la mise en oeuvre de moyens de cryptage et de décryptage au niveau de l'unité de lecture et l'enregistrement sur le transpondeur des données d'application sous une forme cryptée.

Un avantage de la présente invention réside dans le fait qu'elle assure une grande flexibilité d'utilisation, cette utilisation n'étant en effet pas limitée par les capacités mémoires restreinte du transpondeur. L'invention permet ainsi de maintenir les coûts de fabrication des transpondeurs à un niveau faible leur assurant notamment une large diffusion ainsi qu'une répercussion réduite en termes de coûts pour les utilisateurs.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1 montre un schéma bloc d'un support d'information ou transpondeur utilisé dans le cadre de la présente invention ;
- la figure 2 montre une architecture de la mémoire du transpondeur de la figure 1 ;
- la figure 3 montre l'architecture générale d'une unité de lecture selon la présente invention agencée pour converser avec ledit transpondeur ;
- les figures 4a et 4b illustrent, d'une façon non restrictive, différentes phases opératoires de l'unité de lecture de la figure 3 lors de la communication avec un transpondeur et mettant en évidence un exemple non limitatif d'un mode de mise en oeuvre particulier de la présente invention ;
- la figure 5 illustre schématiquement la mise en oeuvre du processus de déchargement et de chargement illustré dans les figures 4a et 4b dans le cadre d'un exemple d'application non limitatif ; et
- la figure 6 illustre une implémentation réseau particulièrement avantageuse du système d'identification électronique de la présente invention.

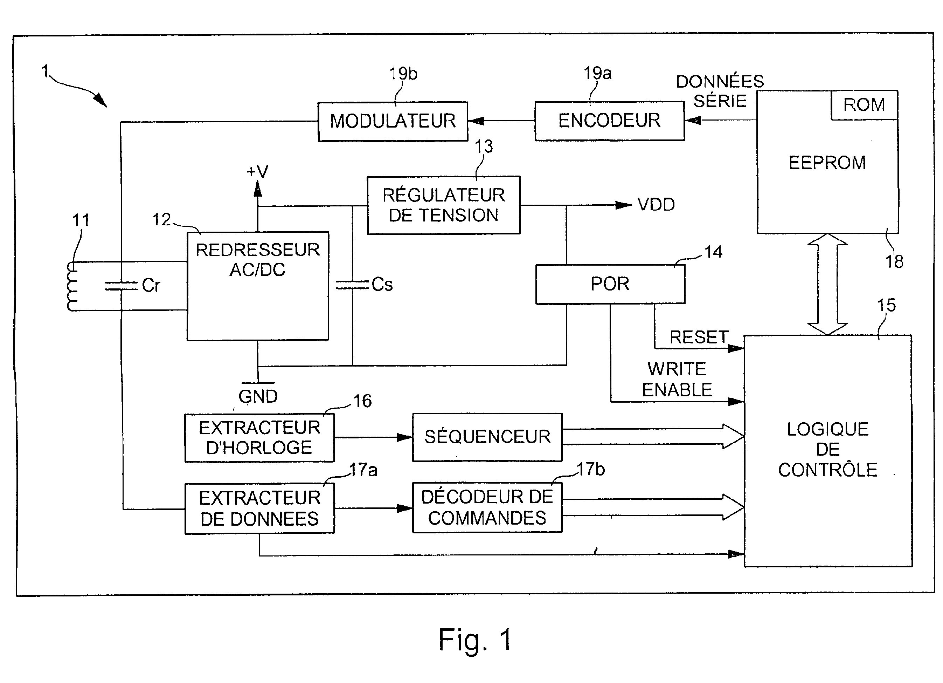

La figure 1 montre un schéma bloc d'un support d'information ou transpondeur pour système d'identification sans contact. Un tel transpondeur est par exemple commercialisé par la société EM Microelectronic-Marin SA sous la référence P4150 "1KBit READ/WRITE CONTACTLESS IDENTIFICATION DEVICE". On se référera autant que nécessaire aux spécifications techniques de ce circuit disponibles publiquement (notamment via le site www.emmarin.ch de cette société). La figure 1 est une représentation schématique de ce circuit transpondeur commercialisé par la société susmentionnée. Ce transpondeur, typiquement agencé pour fonctionner à une fréquence de l'ordre de 125 kHz, est notamment agencé pour coopérer avec une interface de lecture telle l'interface commercialisée par cette même société EM Microelectronic-Marin SA sous la référence P4095 "READ/WRITE ANALOG FRONT END FOR 125kHz RFID BASESTATION" dont la spécification technique est disponible publiquement. On notera que l'utilisation des composants susmentionnés n'est nullement limitative et que d'autres composants analogues pourraient être utilisés pour autant qu'ils permettent de remplir les fonctions qui vont être énoncées ci-dessous.

Le transpondeur, indiqué généralement par la référence numérique 1 dans la figure 1, est alimenté par le champ électromagnétique ambiant, champ qui induit une tension au borne d'une bobine 11 du circuit formant antenne. Cette tension est redressée par un bloc redresseur AC/DC 12 et fournit la tension d'alimentation +V nécessaire au fonctionnement du dispositif. Des moyens de régulation de tension 13 ainsi qu'un bloc de contrôle de mise sous tension 14 assurent une initialisation adéquate d'une logique de contrôle 15 du circuit. Le transpondeur 1 comprend en outre des moyens d'extraction d'horloge 16 permettant de dériver du champ électromagnétique un signal d'horloge assurant le cadencement de la logique de contrôle 15, des moyens d'extraction de données 17a permettant d'extraire des données modulées sur le champ électromagnétique, ainsi qu'un bloc décodeur de commandes 17b. Le transpondeur 1 comprend par ailleurs des moyens de mémorisation 18, constitués notamment d'une mémoire reprogrammable EEPROM et d'une mémoire morte ROM, et des moyens associés d'encodage 19a et de modulation 19b permettant de moduler et transmettre des informations stockées dans lesdits moyens de mémorisation 18.

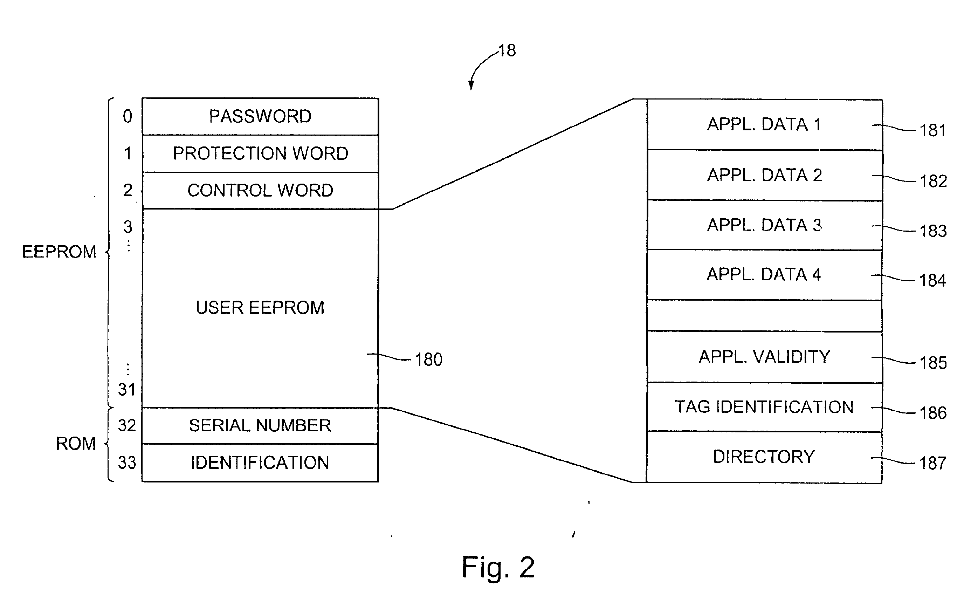

La figure 2 montre de manière schématique l'architecture et l'organisation des moyens de mémorisation 18 du transpondeur 1 illustré à la figure 1. Comme déjà mentionné, ces moyens de mémorisation 18 comprennent notamment une mémoire EEPROM ainsi qu'une mémoire morte ROM. La mémoire EEPROM est constituée, de manière non limitative, d'une mémoire EEPROM de 1024 bits organisée en trente-deux mots de 32 bits (mots 0 à 31 dans la figure 2). Les moyens de mémorisation 18 comprennent en outre, toujours de manière non limitative, deux mots de 32 bits supplémentaires (mots 32 et 33 dans la figure 2) programmés par laser dans une mémoire morte ROM (cf. notamment la spécification du composant P4150 susmentionné). Ces deux mots mémoire de ROM 32 et 33 contiennent respectivement un numéro de série DEVICE SERIAL NUMBER et un numéro d'identification DEVICE IDENTIFICATION qui sont uniques, c'est-à-dire propres et uniques à chaque transpondeur.

Plus spécifiquement, les trois premiers mots de 32 bits (mots 0 à 2) sont respectivement assignés à un mot de passe désigné PASSWORD, à un mot de protection désigné PROTECTION WORD, et à un mot de contrôle désigné CONTROL WORD. Le mot de passe PASSWORD est en écriture uniquement et ne peut être lu depuis l'extérieur. Ce mot de passe PASSWORD doit typiquement être transmis au transpondeur si l'on désire modifier le mot de protection PROTECTION WORD et/ou le mot de contrôle CONTROL WORD. On ne s'attardera pas ici sur la description des mots PASSWORD, PROTECTION WORD et CONTROL WORD. A ce sujet, on pourra par exemple se référer à la spécification du produit P4150 susmentionné.

L'espace mémoire composé dans cet exemple des vingt-neufs mots mémoires 3 à 31 de l'EEPROM (dans cet exemple 928 bits) est disponible notamment pour l'utilisateur et forme un espace mémoire utilisateur 180 désigné USER EEPROM. On notera que des données complémentaires relatives au transpondeur peuvent également être stockées dans cet espace mémoire. Ces données complémentaires peuvent par exemple comprendre la date d'émission et la durée de validité du transpondeur, une signature assurant l'origine du transpondeur, ou d'autres données relatives à l'identification et la validité du transpondeur lui-même. En particulier, l'espace mémoire 180 comprend un segment mémoire 186 contenant des données désignées TAG IDENTIFICATION permettant de vérifier que le transpondeur est affilié au système d'identification, c'est-à-dire qu'il s'agit effectivement d'un transpondeur gérant plusieurs applications selon la présente invention, ainsi que la validité dans le temps de ce transpondeur et son origine (signature).

Dans le cadre de la présente invention, et selon un exemple non limitatif basé sur le produit susmentionné, l'espace mémoire utilisateur USER EEPROM 180 est en particulier utilisé pour gérer une pluralité d'applications distinctes, désignées APPL1, APPL2, etc. Plus spécifiquement, comme illustré schématiquement à la figure 2, l'espace mémoire USER EEPROM 180 est segmenté en une pluralité de segments mémoires 181, 182, 183, 184, dans cet exemple non limitatif au nombre de quatre, susceptibles de contenir des données d'application désignées APPL. DATA i, i = 1 à 4, propres à diverses applications, l'espace mémoire restant étant préférablement utilisé pour le stockage de données additionnelles qui seront présentées ultérieurement. A chaque application est attribué au moins un segment mémoire. Toutefois, si nécessaire, plusieurs segments mémoires peuvent être alloués à une application. On comprendra par exemple que les segments mémoires 181 et 182 pourraient être alloués à une première application (ou un premier groupe d'applications) d'un premier opérateur, et les segments 183 et 184 à des applications de deux autres opérateurs.

Dans le cadre de la présente invention, on notera que la notion d'application n'implique pas nécessairement que cette application n'est prévue que pour un type de service. Compte tenu de l'espace mémoire à disposition, on comprendra aisément que les données d'application de plusieurs applications d'un même opérateur peuvent être mémorisées sur un unique segment mémoire. En d'autres termes, on comprendra par le terme "application", un groupe d'applications gérées par un opérateur et pouvant comprendre une ou plusieurs applications, ou plus exactement sous-applications. On insistera sur le fait que chaque opérateur d'application disposera en pratique d'un ou plusieurs segments mémoires pour gérer le groupe d'applications qui lui est propre.

Préférablement l'espace mémoire comporte en outre un segment mémoire additionnel 187 pour contenir des données de répertoire désignées DIRECTORY fournissant une indication des applications mémorisées sur le transpondeur et leur position en mémoire. Plus spécifiquement, ces données de répertoire désignées DIRECTORY comprennent des données (identificateurs ou descripteurs d'application, ci-après APPL. IDENTIFIER) relatives aux applications utilisées et mémorisées dans l'espace mémoire. A chaque application est associé un identificateur d'application distinct dont les caractéristiques seront présentées plus loin.

Les mots mémoires restants sont préférablement réservés pour stocker des données complémentaires relatives au transpondeur (comme mentionné plus haut) ou aux applications mémorisées. En particulier, les données complémentaires relatives aux applications peuvent avantageusement comprendre des données 185 (désignées APPL. VALIDITY) relatives à la validité des applications mémorisées, par exemple la durée de validité de ou des applications concernées. Comme on le verra ultérieurement, ces données de validité peuvent avantageusement permettre la libération d'une partie de l'espace mémoire attribué à une application qui est arrivée à échéance.

Dans le cadre de la présente invention, les données d'application APPL. DATA i, et, avantageusement, les données de répertoire DIRECTORY, les données d'identification du transpondeur TAG IDENTIFICATION ainsi que les données de validité des applications APPL. VALIDITY, sont préférablement cryptées au moins au moyen d'une première clé de codage, clé de codage qui n'est connue et visible que pour l'unité de lecture. Dans le cadre de la présente invention, on notera que la sécurité et la confidentialité des données est à proprement parler assurée par l'unité de lecture du système d'identification. Les données mémorisées sur le transpondeur sont parfaitement lisibles lors de la communication entre le transpondeur et l'unité de lecture mais uniquement sous forme cryptée, le cryptage et le décryptage de ces données étant opéré par l'unité de lecture, uniquement, au moyen d'une ou plusieurs clés de codage comme on le verra plus loin.

En se référant à nouveau à la figure 2, on notera que la programmation des mots 0 à 2 (PASSWORD, PROTECTION WORD, CONTROL WORD) est effectuée typiquement par le fabricant de l'unité de lecture. Les deux mots mémoires de ROM 32 et 33 sont quant à eux programmés à la fabrication par le fabricant du transpondeur. Les mots mémoires restant sont programmables notamment (mais pas uniquement) par l'utilisateur (en particulier par le ou les opérateurs ou fournisseurs d'application), la programmation de certains mots mémoires (telles les données d'identification TAG IDENTIFICATION ou les données de répertoire DIRECTORY) étant sous le contrôle de l'unité de lecture.

Comme déjà brièvement exposé ci-dessus, à chaque application (d'un même opérateur ou d'opérateurs différents) est associé un identificateur d'application distinct APPL. IDENTIFIER. Cet identificateur est mémorisé, avec le ou les autres identificateurs d'application éventuels dans un segment mémoire spécifique, distinct des segments mémoires destinés à mémoriser les données d'application, à savoir le segment de répertoire (segment 187 dans la figure 2) contenant les données de répertoire DIRECTORY. Ces données de répertoire DIRECTORY permettent, d'une part, d'identifier quelles applications sont mémorisées sur le transpondeur et, d'autre part, de spécifier dans quel(s) segment(s) mémoire(s) les données d'application de ces applications sont mémorisées. Ces données de répertoire DIRECTORY facilitent grandement l'identification et la localisation des données d'application mémorisées sur le transpondeur. De la sorte, il n'est plus nécessaire de parcourir l'ensemble des données mémorisées pour vérifier si les données propres à une application déterminée sont présentes.

A l'examen de la figure 2, on notera qu'un espace mémoire limité est à disposition pour mémoriser les données d'application propres à un nombre maximal d'applications, dans cet exemple non limitatif au nombre de quatre. Il est bien entendu que ce nombre maximal d'applications peut être variable en fonction de la capacité mémoire à disposition et que le nombre de quatre applications n'est mentionné ici qu'à titre purement illustratif et non limitatif.

Selon la présente invention, dans l'éventualité où tous les segments mémoires alloués pour la mémorisation des données d'applications sont occupés par des données, ou dans l'éventualité ou la capacité mémoire restante du transpondeur est trop limitée pour permettre l'enregistrement de données relatives à une application additionnelle, il est prévu de temporairement décharger une partie des données d'application mémorisées pour libérer suffisamment d'espace mémoire afin de mémoriser les données d'application relatives à l'application additionnelle.

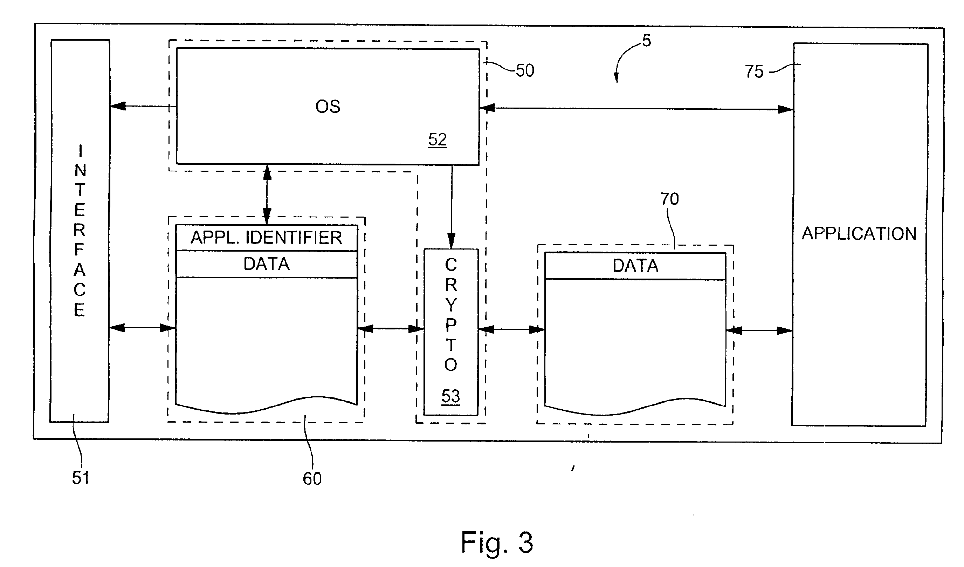

En se référant maintenant à la figure 3, on va décrire l'architecture générale d'une unité de lecture utilisée dans le cadre de la présente invention et dont une description plus détaillée fait l'objet de la demande internationale No. WO 02/35464susmentionnée. Par "unité de lecture", on comprendra aussi bien une unité agencée pour permettre uniquement une lecture d'un transpondeur qu'une unité agencée pour permettre à la fois une lecture et une programmation d'un transpondeur. De manière générale, on pourra également se référer à la spécification du produit P4150 susmentionné pour obtenir un descriptif général d'une unité de lecture agencée pour effectuer des opérations de lecture et/ou d'écriture d'un transpondeur.

Dans la figure 3, on a illustré de manière schématique l'architecture et l'organisation de l'unité de lecture, indiquée généralement par la référence numérique 5. On notera que l'architecture de cette unité de lecture se compose essentiellement de trois parties distinctes, à savoir (1) un module de gestion protégé (ou système d'exploitation) 50, (2) une mémoire protégée 60, et (3) une mémoire d'application 70.

Le module de gestion 50 est programmé et codé par le fabricant de l'unité de lecture et n'est pas accessible par l'application. Il est en liaison avec une interface d'écriture/lecture 51 du transpondeur, des moyens de contrôle et de traitement 52 et des moyens de cryptage/décryptage 53 permettant le cryptage, respectivement le décryptage, de données à partir d'une ou plusieurs clés de codage. On notera ici qu'une clé de codage de base utilisée pour le cryptage des données est avantageusement dérivée du numéro de série unique de chaque transpondeur (ou tout autre code propre et unique à chaque transpondeur). De la sorte le cryptage des données sur le transpondeur est unique pour chaque transpondeur, empêchant ainsi qu'un transpondeur contenant une simple copie des données d'un autre transpondeur du système puisse être utilisé. Des clés de codage additionnelles sont préférablement utilisées pour effectuer le cryptage de ces données. On notera que le module de gestion 50 assure également une vérification de la conformité du transpondeur avec le système (notamment une vérification de son numéro de série et de sa validité) ainsi que la gestion des transactions avec le transpondeur (notamment la gestion de sa mémoire).

La mémoire protégée 60 est utilisée pour le cryptage des informations et la gestion de la mémoire du transpondeur. Cette mémoire protégée n'est pas accessible par l'application. Elle comprend divers champs mémoires destinés notamment à permettre la mémorisation des données relatives au numéro de série du transpondeur, sa validité, et aux données d'application.

La mémoire d'application 70 est mise à la disposition de l'application 75 et contient les informations la concernant. En particulier, elle comprend des champs mémoire destinés notamment à mémoriser des données relatives à l'identification du transpondeur (notamment son numéro de série) et des données non cryptées de l'application.

Préférablement, la partie protégée 50, 60 de l'unité de lecture inclut le ou les identificateurs d'application APPL. IDENTIFIER des applications pour lesquelles l'unité de lecture est configurée. On notera que ce ou ces identificateurs d'application pourraient alternativement être stockées en mémoire non protégée.

Au titre de réalisation pratique, l'unité de lecture 5 peut être prévue comme extension d'un terminal informatique (sous la forme d'une carte d'extension ou d'un périphérique) ou sous la forme d'une unité "stand alone", c'est-à-dire une unité ne nécessitant pas d'interfaçage spécifique avec un terminal informatique.

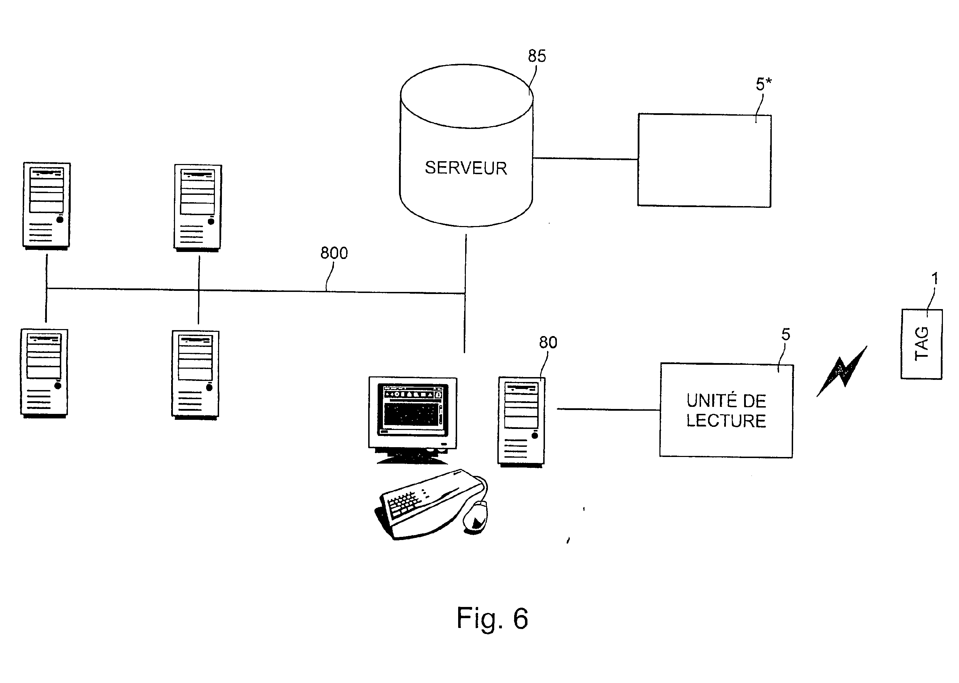

Par ailleurs, l'unité de lecture peut avantageusement être connectée à un réseau informatique local ou étendu et former une interface d'accès sécurisée pour accéder à des données stockées sur un serveur de ce réseau et notamment permettre l'enregistrement des données d'application temporairement déchargées du transpondeur. Une telle implémentation réseau est proposée dans la demande internationale WO 02/35464et est illustrée dans la figure 6. Selon cette implémentation, au moins une unité de lecture 5 est connectée à un réseau informatique (local ou étendu) 800, tel internet, par l'intermédiaire d'un terminal informatique 80. Au moins un serveur 85 accessible depuis le terminal informatique 80 est également connecté sur le réseau 800, ce serveur 85 étant notamment susceptible de stocker les données d'application temporairement déchargées du transpondeur 1. Avantageusement, le serveur lui-même est équipé ou connecté à une unité séparée, désignée 5*, dont les fonctionnalités sont sensiblement similaires à l'unité de lecture 5, abstraction faite de l'interface d'écriture/lecture avec le transpondeur. Cette seconde unité 5* peut avantageusement contenir un identificateur d'application commun avec l'unité de lecture 5 du transpondeur 1 (cet identificateur d'application pouvant être différent de l'identificateur d'application utilisé pour assurer la communication entre l'unité de lecture 5 et le transpondeur 1). Selon cette implémentation, on prévoit un processus d'authentification entre l'unité de lecture 5 du transpondeur et l'unité 5* connectée au serveur. Selon cette implémentation particulière, on notera par ailleurs que l'unité additionnelle 5*, connectée au serveur 85, peut notamment être agencée pour assurer le cryptage des données transmises à l'unité de lecture 5.

Dans le cadre de l'exemple d'application de la figure 6, un utilisateur a ainsi la possibilité d'accéder à et de stocker des données sur le serveur 85 via le réseau informatique 800. Comme déjà exposé plus haut, l'utilisateur bénéficie ainsi d'une banque de données centralisée dont l'accès est facilité.

Au moyen de l'implémentation de la figure 6, l'accès sécurisé à des données stockées par le serveur 85 peut ainsi être assuré, à un premier niveau, par une authentification entre le transpondeur 1 et l'unité de lecture 5, et, à un second niveau, par une authentification entre l'unité de lecture 5 et l'unité 5* connectée au serveur. Comme on le verra plus loin, un troisième niveau de sécurité peut être réalisé en équipant l'unité de lecture 5 et/ou le transpondeur 1 de moyens d'entrée d'un code d'identification personnel (PIN) ou de moyens de mesure d'une grandeur biométrique. De la sorte, on comprendra que l'accès aux données stockées sur le serveur 85 nécessite l'autorisation d'une multitude de mécanismes successifs, interconnectés à la manière de maillons d'une chaîne.

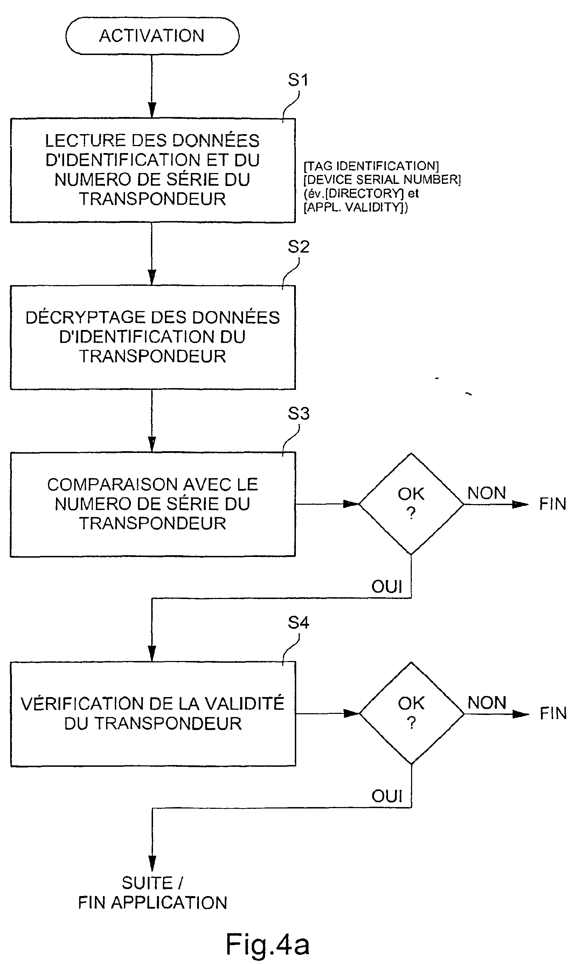

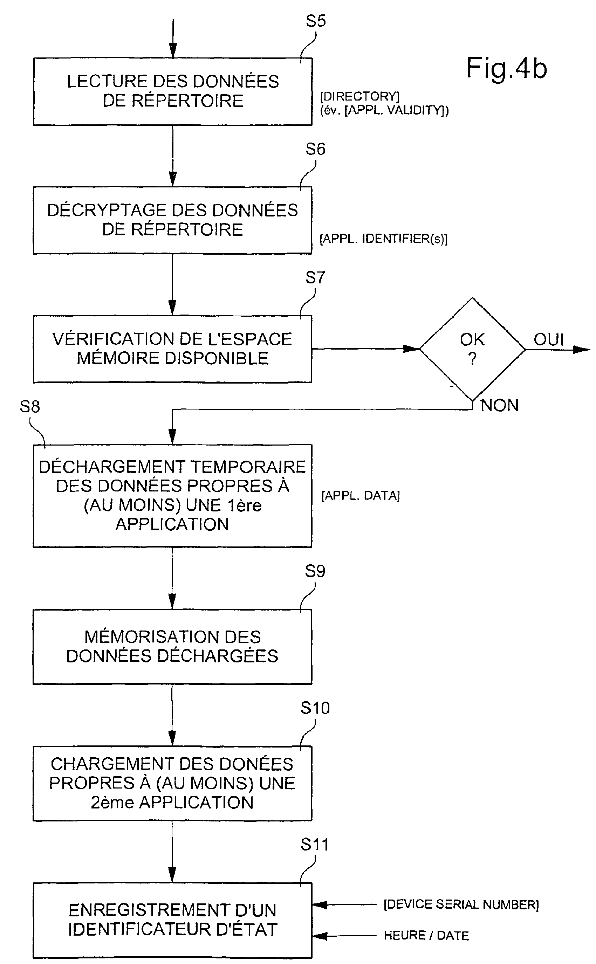

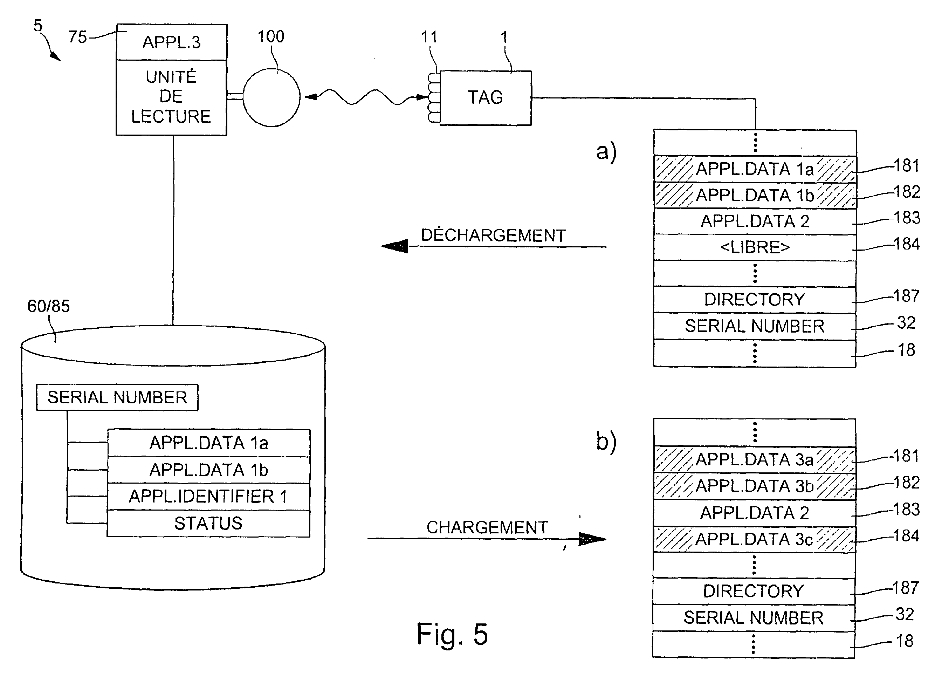

Au moyen des figures 4a, 4b et 5 on décrira brièvement un mode de mise en oeuvre de la présente invention. On notera que la communication entre l'unité de lecture et le transpondeur est opérée selon les processus de lecture standard ("Standard Read"), de lecture sélective ("Selective Read") et d'écriture qui sont amplement décrits dans la spécification du produit P4150 susmentionné. Ces processus spécifiques ne sont bien évidemment nullement limitatifs de l'application de la présente invention et ne sont donnés ici qu'à titre d'exemple uniquement. On ne rappellera pas ici ces processus qui sont par ailleurs résumés dans le document WO 02/35464.

D'une manière générale, le processus de communication entre le transpondeur et l'unité de lecture débute par l'identification de la conformité du transpondeur avec le système, c'est-à-dire une vérification de son affiliation au système multi-applications et de la validité de cette affiliation. Cette phase est illustrée par les étapes S1 à S4 dans la figure 4a. Cette phase d'identification consiste ainsi préférablement en une lecture (S1), suite à l'activation du transpondeur, des données d'identification TAG IDENTIFICATION mémorisées dans le segment mémoire 186 du transpondeur (cf. figure 2) et du numéro de série du transpondeur DEVICE SERIAL NUMBER mémorisé en ROM (mot 32 dans la figure 2). L'opération de lecture des données susmentionnées peut être effectuée, dans le cas d'espèce, selon le processus de lecture standard ("Standard Read") complété si nécessaire par une requête en lecture sélective ("Selective Read").

Préférablement, les données d'identification TAG IDENTIFICATION incluent une image du numéro de série du transpondeur DEVICE SERIAL NUMBER codé au moyen d'une clé de codage spécifique unique au transpondeur ainsi qu'une information concernant la validité dans le temps de ce transpondeur. Le processus d'identification du transpondeur se poursuit ainsi (S2) par une étape de décryptage des données d'identification TAG IDENTIFICATION, puis (S3) une comparaison des données décryptées avec le numéro de série ainsi que (S4) un examen de la validité du transpondeur. Si les résultats de ces vérifications sont positifs, le processus de communication peut se poursuivre. Dans le cas contraire, le processus est interrompu. Au titre de complément, le processus d'identification peut avantageusement mettre en oeuvre un processus d'authentification mutuelle entre l'unité de lecture et le transpondeur. De tels processus d'authentification sont bien connus de l'homme du métier et ne seront en conséquence pas décrits ici.

La phase d'identification susmentionnée est suivie d'une phase de lecture et écriture (ou phase de déchargement et chargement). Cette phase va maintenant être brièvement décrite en référence à l'organigramme de la figure 4b. Le processus de communication se poursuit ainsi par (S5) la lecture des données de répertoire DIRECTORY enregistrées sur le transpondeur. On notera que ces données de répertoire DIRECTORY peuvent être lues initialement à l'étape S1 susmentionnée ou alternativement faire l'objet d'une requête en lecture sélective. A l'étape S6, ces données de répertoire DIRECTORY sont décryptées par l'unité de lecture (au moyen d'une clé unique propre à chaque transpondeur, par exemple basée sur son code d'identification) afin d'en extraire et identifier les divers identificateurs d'application mentionnés plus haut indiquant pour quelles applications le transpondeur est configuré.

Suit alors (S7), dans cet exemple de mise eu oeuvre préféré, une étape de vérification de l'espace mémoire disponible sur le transpondeur. Cette étape a pour but de déterminer si l'espace mémoire alloué pour la mémorisation des données d'application (notamment les segments mémoire 181 à 184 dans la figure 2) contient suffisamment d'espace libre pour permettre la mémorisation de données d'application propres à l'application désirée. Si cet espace libre est suffisant (symbolisé dans la figure 4b par la réponse affirmative au test pratiqué après l'étape S7), l'enregistrement des données d'application propres à l'application additionnelle désirée peut être opéré sans autres modifications (on se référera à ce titre au document WO 02/35464).

Dans la négative, il est par contre procédé (étape S8) au déchargement temporaire des données d'application relatives à au moins une première application et qui sont enregistrées dans la mémoire du transpondeur. Cette opération de déchargement peut consister simplement en un déchargement des données d'application propres à une ou plusieurs applications distinctes, par exemple en commençant par les premiers segments mémoires de l'espace mémoire alloué pour ces données (segment mémoire 181 et suivants dans la figure 2). Cette étape de déchargement pourrait alternativement être précédée d'une requête destinée à l'utilisateur et lui intimant de sélectionner l'une des applications stockées en mémoire. De la même manière, ce déchargement pourrait être précédé d'une étape de validation demandant à l'utilisateur une autorisation préalable, par exemple par la demande d'une quittance, voire l'introduction d'un code d'identification personnel (PIN) ou la vérification préalable d'une grandeur biométrique (empreinte digitale ou vocale, etc.).

La figure 5 illustre schématiquement la mise en oeuvre du processus de déchargement susmentionné dans le cadre d'un exemple non limitatif. Dans cet exemple, on est parti de l'hypothèse que le transpondeur 1 est du type décrit en référence aux figures 1 et 2 et qu'il comporte, mémorisées dans les segments mémoires 181 à 184 alloués à la mémorisation de données d'application, des données d'application propres à deux applications distinctes, à savoir des données d'application désignées APPL. DATA 1a et 1b propres à une première application et des données d'application désignées APPL. DATA 2 propres à une seconde application, l'un 184 des segments mémoires étant libre. Pour les besoins de l'explication, on fait également l'hypothèse que l'unité de lecture 5 est configurée pour opérer en liaison avec une troisième application, désignée APPL. 3, nécessitant trois segments mémoires pour l'enregistrement des données d'application, désignées APPL. DATA 3a à 3c, propres à cette application additionnelle.

Conformément à ce qui a été mentionné jusqu'ici en référence aux figures 4a et 4b, après identification du transpondeur (étapes S1 à S4), lecture et décryptage des données de répertoire DIRECTORY (étapes S5 et S6) et vérification de l'espace mémoire disponible (étape S7), il est procédé au déchargement temporaire (étape S8) d'une partie des données d'application mémorisées sur le transpondeur 1. Selon l'hypothèse faite ci-dessus, l'application additionnelle APPL. 3 nécessite un espace mémoire comprenant au moins trois segments mémoires libres. Dans cette optique, il conviendra au moins de libérer l'espace mémoire occupé par les données d'application APPL. DATA 1a et 1b propres à la première application, à savoir les segments mémoires 181 et 182, les données propres à la seconde application pouvant ou non être déchargées (au choix de l'opérateur de l'unité de lecture 5 et/ou du porteur du transpondeur 1).

Au moins les données d'application APPL. DATA 1a et 1b sont ainsi déchargées temporairement et mémorisées (étape S9 dans la figure 4b) dans un dispositif de mémorisation associé à l'unité de lecture. Il peut s'agir ici de la mémoire protégée 60 interne à l'unité de lecture 5 (cf. figure 3) ou de tout dispositif de mémorisation associé à l'unité de lecture 5, tel le serveur 85 de la figure 6 auquel peut être connectée l'unité de lecture via un réseau information local ou étendu.

Préférablement, les données déchargées du transpondeur sont organisées en mémoire en utilisant le numéro de série DEVICE SERIAL NUMBER du transpondeur 1 qui a été lu à l'étape S1 et comportent, outre les données d'application proprement dites, le ou les identificateurs d'application associé à ces données d'application, dans cet exemple l'identificateur d'application APPL. IDENTIFIER 1 propre à la première application. On notera que cet identificateur a préalablement été extrait et décrypté durant les étapes précédentes à partir des données de répertoire DIRECTORY du transpondeur (étapes S5 et S6 de la figure 4b). Il peut en aller de même pour les données de validité dans le temps (APPL. VALIDITY ― cf. figure 2) des données d'application concernées qui peuvent être lues, décryptées et mémorisées avec les données d'application qui sont déchargées du transpondeur.

Conformément à ce qui a été mentionné plus haut, on notera par ailleurs que les données d'application temporairement déchargées du transpondeur sont préférablement mémorisées par l'unité de lecture 5 dans le dispositif associé sous une forme identique à la forme sous laquelle celles-ci sont mémorisées sur le transpondeur 1, c'est-à-dire sous une forme cryptée. Conformément à ce qui a été décrit plus haut, et en référence à la demande internationale WO 02/35464, on comprendra que le décryptage des données d'application mémorisées sur le transpondeur 1 nécessite la connaissance de ou des clés de cryptage propres à cette application, dont l'unité de lecture 5 n'est pas nécessairement munie. La confidentialité des données déchargées est donc toujours garantie. Les données d'application déchargées sont ainsi mémorisées sous cette forme jusqu'à leur rechargement ultérieur.

Outre la mémorisation du numéro de série du transpondeur 1, des données d'application déchargées, et du ou des identificateurs d'application correspondants, il convient par ailleurs préférablement d'enregistrer (étape S11 dans la figure 4b) un identificateur d'état (désigné STATUS dans la figure 5) indiquant qu'un transfert temporaire de données d'application a été effectué. On notera que l'enregistrement de cet identificateur d'état peut être opéré, indépendamment, préalablement au déchargement des données (étape S9), entre ce déchargement et le chargement des données d'application de l'application additionnelle (étape S10) ou au terme du processus comme illustré dans la figure 4b.

L'identificateur d'état STATUS peut être enregistré dans l'unité de lecture (ou tout autre dispositif associé) et/ou dans les moyens de mémorisation du transpondeur, cet identificateur d'état étant modifié lors de chaque échange de données d'application entre l'unité de lecture et le transpondeur. En particulier, il conviendra au moins d'enregistrer cet identificateur d'état dans l'unité de lecture (ou dans un dispositif associé) et de prévoir que cet identificateur comporte au moins une indication d'un numéro d'identification du transpondeur (par exemple le numéro de série du transpondeur) avec lequel lesdites données d'application ont été échangées ainsi qu'une indication temporelle de l'instant (heure et/ou date) où ces données d'application ont été échangées. Cet identificateur d'état a essentiellement pour but d'assurer que les données qui sont ultérieurement rechargées dans le transpondeur résultent effectivement d'une opération de déchargement préalable par l'unité de lecture et correspondent effectivement à des données initialement déchargées depuis ce transpondeur.

Suite au déchargement des données du transpondeur (étape S9), il est procédé (étape S10) au chargement, dans la mémoire du transpondeur, des données d'application propres à au moins une seconde application (par exemple l'application additionnelle APPL. 3 dans la figures 5). Cette étape S10 consiste en un cryptage des données d'application, une transmission et écriture de ces données dans la mémoire du transpondeur, une mise à jour des données de répertoire DIRECTORY (et éventuellement des données de validité APPL. VALIDITY), suivie typiquement par une étape de vérification des données transmises comme cela est déjà décrit en référence à la figure 4c dans le document WO 02/35464.

La figure 5 illustre schématiquement la mise en oeuvre du processus de chargement susmentionné. Les données d'application, désignées APPL. DATA 3a à 3b, propres à l'application additionnelle APPL. 3 sont ainsi chargées dans les segments mémoires libres du transpondeur, à savoir les segments mémoires 181, 182 et 183 dans cet exemple.

Une fois le processus susmentionné exécuté, l'utilisateur a donc la possibilité d'utiliser le transpondeur en liaison avec l'application additionnelle désirée (à savoir l'application APPL. 3 dans l'exemple de la figure 5). Les données temporairement déchargées du transpondeur peuvent être rechargées dans le transpondeur à un stade ultérieur conformément au processus déjà décrit ci-dessus et qui ne sera en conséquence pas décrit à nouveau.

Le processus qui vient d'être décrit en référence aux figures 4a, 4b et 5 peut être effectué, dans le cadre d'un exemple d'application non limitatif, préalablement à une entrée du transpondeur dans un espace délimité, par exemple un espace de loisir (piscine, domaine skiable, parc d'attraction, etc.), un espace culturel (musée, lieu archéologique, etc.) ou tout autre espace délimité où l'on désire offrir aux clients ou visiteurs un ensemble de services (payants ou non) relatifs au lieu visité. Dans cet exemple d'application, la gestion des données d'application pourrait être effectuée de manière parfaitement invisible pour l'utilisateur ou éventuellement avec son autorisation préalable. Dans le cadre d'une telle application, les données d'application initialement déchargées sont rechargées dans l'espace mémoire du transpondeur lors d'une sortie de ce transpondeur hors de l'espace délimité.

Dans le cadre d'un autre exemple d'application, l'échange temporaire de données d'application peut être opéré par l'utilisateur ou porteur du transpondeur (par exemple au moyen d'un terminal informatique personnel équipé d'une unité de lecture appropriée). Dans cet exemple d'application, l'utilisateur a l'entière maîtrise de son « portefeuille » d'applications, celui-ci sélectionnant les applications appropriées en fonction de ses besoins.

On notera par ailleurs que les étapes S5 à S7 susmentionnées sont préférablement également prévues pour lire, décrypter et vérifier les données de validité (APPL. VALIDITY) des applications du transpondeur, et, dans l'éventualité où certaines données d'application ne sont plus valides, pour libérer l'espace mémoire occupé par cette application. Dans ce cas, il sera judicieux d'équiper l'unité de lecture d'une horloge temps réel (ou « real time dock ») pour déterminer l'échéance de cette validité dans le temps.

On comprendra que diverses modifications et/ou améliorations évidentes pour l'homme du métier peuvent être apportées aux modes de réalisation décrits dans la présente description sans sortir du cadre de l'invention défini par les revendications annexées. En particulier, on rappellera que les produits P4150 et P4095 auxquels il est fait référence dans la présente invention ne constituent que des exemples possibles de produits pouvant être utilisés dans le cadre de la présente invention. D'autres solutions équivalentes pourraient parfaitement être utilisées ou envisagées. Au titre d'amélioration, on pourra par exemple utiliser un transpondeur multi-applications du type décrit dans la demande de brevet européen EP 1 087 332 au nom de la société EM Microelectronic-Marin SA. On pourra également utiliser une fréquence de communication autre que la fréquence de 125 kHz utilisée par les composants susmentionnés. D'autres fréquences utilisées communément sont par exemple 13,56 MHz et 2,4 GHz. On notera finalement que les transpondeurs du système selon l'invention peuvent être de type passif ou actif, le type passif étant préféré pour des raisons de simplicité et de durée de vie.

## Revendications

1. Système d'identification électronique sans contact comprenant au moins une unité de lecture (5) et au moins un support d'information ou transpondeur (1) susceptible d'être interrogé par ladite unité de lecture (5),
ce transpondeur comportant des moyens de mémorisation (18) comprenant un espace mémoire (180) segmenté pour accueillir des données d'application (APPL. DATA i) relatives à une pluralité d'application distinctes (APPL. i),
**caractérisé en ce que** ladite unité de lecture (5) comprend des moyens pour décharger temporairement des données d'application propres à au moins une première application mémorisées dans ledit espace mémoire (180) du transpondeur afin de libérer au moins une partie dudit espace mémoire (180) et pour charger temporairement dans ladite partie libérée dudit espace mémoire (180) du transpondeur, d'autres données d'application propres à au moins une seconde application.

2. Système d'identification électronique selon la revendication 1, **caractérisé en ce qu'**un identificateur d'état (STATUS) indiquant qu'un transfert temporaire de données d'application (APPL. DATA i) a été effectué est enregistré dans ladite unité de lecture (5) et/ou dans lesdits moyens de mémorisation (18) du transpondeur (1), cet identificateur d'état étant modifié lors de chaque échange de données d'application entre ladite unité de lecture et ledit transpondeur.

3. Système d'identification électronique selon la revendication 2, **caractérisé en ce que** ledit identificateur d'état (STATUS) est au moins enregistré dans ladite unité de lecture (5) et comporte au moins une indication du numéro d'identification (DEVICE SERIAL NUMBER) du transpondeur avec lequel lesdites données d'application ont été échangées ainsi, éventuellement, qu'une indication temporelle de l'instant où ces données d'application ont été échangées.

4. Système d'identification électronique selon l'une quelconque des revendications 1 à 3, **caractérisé en ce que** le déchargement des données d'application propres à la première application et le chargement des données d'application propres à la seconde application est opéré préalablement à une entrée dudit transpondeur dans un espace délimité, les données d'application propres à la première application étant rechargées dans l'espace mémoire dudit transpondeur lors d'une sortie de ce transpondeur hors dudit espace délimité.

5. Système d'identification électronique selon l'une quelconque des revendications précédentes, **caractérisé en ce que** lesdites données d'application (APPL. DATA i) sont mémorisées sous forme cryptée dans lesdits moyens de mémorisation du transpondeur et **en ce que** les données d'application propres à la première application qui sont déchargées dudit transpondeur sont mémorisées sous une forme cryptée ou non, dans ladite unité de lecture ou dans un dispositif de mémorisation associé à cette unité de lecture.

6. Système d'identification électronique selon l'une quelconque des revendications précédentes, **caractérisé en ce que** ledit espace mémoire (180) des moyens de mémorisation (18) est divisé en une pluralité de segments mémoires (181, 182, 183, 184) pour mémoriser chacun des données d'application (APPL. DATA), et un segment mémoire additionnel (187) pour mémoriser des données de répertoire (DIRECTORY) contenant une indication de chaque application mémorisée sur ledit transpondeur, ces données de répertoire incluant un identificateur d'application distinct (APPL. IDENTIFIER) associé à chaque application mémorisée par le transpondeur,
et **en ce que** l'identification d'application de ladite première application est également déchargé et mémorisé dans ladite unité de lecture ou dans le dispositif de mémorisation associé à cette unité de lecture.

7. Système d'identification électronique selon la revendication 6, **caractérisé en ce que** ledit espace mémoire (180) comporte en outre un segment mémoire (185) comprenant des données (APPL. VALIDITY) relatives à une validité dans le temps des données d'application propres à ladite au moins première application, et **en ce que** ladite unité de lecture (5) comprend des moyens d'horloge pour déterminer l'échéance de la validité des données d'application de la première application et permettre, dans le cas où lesdites données d'application sont arrivées à échéance, une libération de la partie mémoire correspondante de l'espace mémoire (180) des moyens de mémorisation (18) du transpondeur.

8. Système d'identification électronique selon l'une quelconque des revendications précédentes, **caractérisé en ce que** ladite unité de lecture (5) est connectée à un réseau informatique local ou étendu (800), tel internet, pour autoriser l'accès à des données stockées sur un serveur (85) dudit réseau, et **en ce que** lesdites données d'application propres à la première application qui sont déchargées dudit transpondeur sont temporairement mémorisées sur ledit serveur (85).

9. Système d'identification électronique selon la revendication 8, **caractérisé en ce que** ledit serveur est équipé d'une unité additionnelle (5*) ayant des fonctionnalités analogues à ladite unité de lecture (5), cette unité additionnelle (5*) et ladite unité de lecture (5) étant agencées pour s'authentifier mutuellement.

10. Méthode de gestion des données dans un système d'identification électronique sans contact comprenant au moins une unité de lecture (5) et au moins un support d'information ou transpondeur (1) susceptible d'être interrogé par ladite unité de lecture (5),
ce transpondeur comportant des moyens de mémorisation (18) comprenant un espace mémoire (180) segmenté pour accueillir des données d'application (APPL. DATA i) relatives à une pluralité d'application distinctes (APPL. i),
**caractérisée en ce que** cette méthode comprend les étapes suivantes :
- décharger temporairement des données d'application propres à une première application mémorisées dans ledit espace mémoire (180) du transpondeur afin de libérer au moins une partie dudit espace mémoire (180) ; et
- charger temporairement dans ladite partie libérée dudit espace mémoire (180) du transpondeur, d'autres données d'application propres à une seconde application.

11. Méthode selon la revendication 10, **caractérisée qu'**elle comporte en outre une étape consistant à générer et enregistrer un identificateur d'état (STATUS) indiquant qu'un transfert temporaire de données d'application a été effectué entre ladite unité de lecture et ledit transpondeur, cet identificateur d'état étant modifié lors de chaque échange de données d'application entre ladite unité de lecture et ledit transpondeur.

12. Méthode selon la revendication 11, **caractérisée en ce que** ledit identificateur d'état (STATUS) est enregistré dans ladite unité de lecture et/ou dans lesdits moyens de mémorisation du transpondeur.

13. Méthode selon la revendication 11 ou 12, **caractérisée en ce que** ledit identificateur d'état (STATUS) est au moins enregistré dans ladite unité de lecture et comporte au moins une indication du numéro d'identification (DEVICE SERIAL NUMBER) du transpondeur avec lequel lesdites données d'application ont été échangées ainsi, éventuellement, qu'une indication temporelle de l'instant où ces données d'application ont été échangées.

14. Méthode selon l'une quelconque des revendications 10 à 13, **caractérisée en ce que** le déchargement des données d'application propres à la première application et le chargement des données d'application propres à la seconde application est opéré préalablement à une entrée dudit transpondeur dans un espace délimité, les données d'application propres à la première application étant rechargées dans l'espace mémoire dudit transpondeur lors d'une sortie de ce transpondeur hors dudit espace délimité.

15. Méthode selon l'une quelconque des revendications 10 à 14, **caractérisée en ce que** lesdites données d'application (APPL. DATA i) sont mémorisées sous forme cryptée dans lesdits moyens de mémorisation du transpondeur et **en ce que** les données d'application propres à la première application qui sont déchargées dudit transpondeur sont mémorisées sous une forme cryptée ou non, dans ladite unité de lecture ou dans un dispositif de mémorisation associé à cette unité de lecture.

16. Méthode selon l'une quelconque des revendications 10 à 15, **caractérisée en ce que** ledit espace mémoire (180) des moyens de mémorisation (18) est divisé en une pluralité de segments mémoires (181, 182, 183, 184) pour mémoriser chacun des données d'application (APPL. DATA i), et un segment mémoire additionnel (187) pour mémoriser des données de répertoire (DIRECTORY) contenant une indication de chaque application mémorisée sur ledit transpondeur, ces données de répertoire incluant un identificateur d'application distinct (APPL. IDENTIFIER) associé à chaque application mémorisée par le transpondeur,
et **en ce que** l'identificateur d'application de ladite première application est également déchargé et mémorisé dans ladite unité de lecture ou dans le dispositif de mémorisation associé à cette unité de lecture.

17. Méthode selon la revendications 16 , **caractérisée en ce que** ledit espace mémoire (180) comporte en outre un segment mémoire (185) comprenant des données (APPL. VALIDITY) relatives à une validité dans le temps des données d'application propres à ladite au moins première application, cette méthode comprenant les étapes initiales suivantes :
- vérification de l'échéance de la validité des données d'application de ladite première application ; et
- si lesdites données d'application sont arrivées à échéance, suppression des données d'application de cette première application afin de libérer la partie mémoire correspondante dudit espace mémoire des moyens de mémorisation (18) du transpondeur.

## Claims

1. Contactless electronic identification system including a least one read unit (5) and at least one data support or transponder (1) able to be interrogated by said read unit (5),
said transponder including storage means (18) including a segmented memory space (180) for receiving application data (APPL.DATA i) relating to a plurality of distinct applications (APPL. i),
**characterized in that** said read unit (5) includes means for temporarily downloading application data for at least one first application stored in said memory space (180) of the transponder in order to free at least one part of said memory space (180) and for temporarily loading in said freed part of said memory space (180) of the transponder other application data for at least one second application.

2. Electronic identification system according to claim 1, **characterized in that** a status identifier (STATUS) indicating that a temporary transfer of application data (APPL.DATA i) has been carried out is stored in said read unit (5) and/or in said storage means (18) of the transponder (1), said status identifier being altered at each exchange of application data between said read unit and said transponder.

3. Electronic identification system according to claim 2, **characterized in that** said status identifier (STATUS) is at least stored in said read unit (5) and includes at least one serial number indication (DEVICE SERIAL NUMBER) of the transponder with which said application data were exchanged, as well as optionally an indication as to the time at which said application data were exchanged.

4. Electronic identification system according to any one of claims 1 to 3,
**characterized in that** the downloading of application data belonging to the first application and the loading of application data belonging to the second application is performed prior to entry of said transponder into a delimited space, the application data belonging to the first application being reloaded in the memory space of said transponder when said transponder leaves said delimited space.

5. Electronic identification system according to any one of the preceding claims, **characterized in that** said application data (APPL.DATA i) is stored in encrypted form in said transponder storage means and **in that** the application data belonging to the first application which is downloaded from said transponder is stored in encrypted or unencrypted form, in said read unit or in a storage device associated with said read unit.

6. Electronic identification system according to any one of the preceding claims, **characterized in that** said memory space (180) of the storage means (18) is divided into a plurality of memory segments (181, 182, 183, 184) for each storing application data (APPL. DATA), and one additional memory segment (187) for storing directory data (DIRECTORY) containing an indication of each application stored in said transponder, said directory data including a distinct application identifier (APPL. IDENTIFIER) associated with each application stored by the transponder,
and **in that** the application identification of said first application is also downloaded and stored in said read unit or in the storage device associated with said read unit.

7. Electronic identification system according to claim 6, **characterized in that** said memory space (180) further includes one memory segment (185) including data (APPL. VALIDITY) relating to the time validity of the application data belonging to said at least first application, and **in that** said read unit (5) includes clock means for determining the expiry of validity of the application data of the first application and to allow, in the case where said application data have reached the end of validity, release of the corresponding memory part of the memory space (180) of the transponder storage means (18).

8. Electronic identification system according to any of the preceding claims, **characterized in that** said read unit (5) is connected to a local or extensive data network (800), such as the internet, for authorising access to data stored in a server (85) of said network, and **in that** said application data belonging to the first application which are downloaded from said transponder are temporarily stored in said server (80).

9. Electronic identification system according to claim 8, **characterized in that** said server is provided with an additional unit (5*) having similar functionalities to said read unit (5), said additional unit (5*) and said read unit (5) being arranged to authenticate each other.

10. Data management method in a contactless electronic identification system including at least one read unit (5) and at least one data support or transponder (1) able to be interrogated by said read unit (5),
said transponder including storage means (18) including a segmented memory space (180) for receiving application data (APPL.DATA i) relating to a plurality of distinct applications (APPL. i),
**characterized in that** said method includes the following steps:
- temporarily downloading application data belonging to a first application stored in said memory space (180) of the transponder in order to release at least one part of said memory space (180), and
- temporarily loading in said released part of said memory space (180) of the transponder, other application data belonging to a second application.

11. Method according to claim 10, **characterized in that** it further includes a step of generating and storing a status identifier (STATUS) indicating that a temporary transfer of application data has occurred between said read unit and said transponder, said status identifier being altered upon each exchange of application data between said read unit and said transponder.

12. Method according to claim 11, **characterized in that** said status identifier (STATUS) is stored in said read unit and/or in said transponder storage means.

13. Method according to claim 11 or 12, **characterized in that** said status identifier (STATUS) is at least stored in said read unit and includes at least one identification number indication (DEVICE SERIAL NUMBER) of the transponder with which said application data have been exchanged, and, if necessary, a time indication as to the moment when said application data was exchanged.

14. Method according to any one of claims 10 to 13, **characterized in that** the downloading of application data belonging to the first application and the loading of application data belonging to the second application is performed prior to entry of said transponder into a delimited space, the application data belonging to the first application being reloaded in said transponder memory space when said transponder leaves said delimited space.

15. Method according to any one of claims 10 to 14, **characterized in that** said application data (APPL. DATA i) is stored in encrypted form in said transponder storage means and **in that** the application data belonging to the first application which are downloaded from said transponder is stored in encrypted or unencrypted form in said read unit or in a storage device associated with said read unit.

16. Method according to anyone of claims 10 to 15, **characterized in that** said memory space (180) of the storage means (18) is divided into a plurality of memory segments (181, 182, 183, 184) for each storing application data (APPL. DATA), and one additional memory segment (187) for storing directory data (DIRECTORY) containing an indication of each application stored in said transponder, said directory data including a distinct application identifier (APPL. IDENTIFIER) associated with each application stored by the transponder,
and **in that** the application identification of said first application is also downloaded and stored in said read unit or in the storage device associated with said read unit.

17. Method according to claim 16, **characterized in that** said memory space (180) further includes one memory segment (185) including data (APPL. VALIDITY) relating to the time validity of the application data belonging to said at least first application, said method including the following initial steps:
- verification of the expiry of validity of the application data of said first application; and
- if said application data have reached expiry, removal of the application data of said first application in order to release the corresponding memory part of said memory space of the transponder storage means (18).

## Patentansprüche

1. System für die kontaktlose elektronische Identifizierung, das wenigstens eine Leseeinheit (5) und wenigstens einen Informationsträger oder Transponder (1), der von der Leseeinheit (5) abgefragt werden kann, umfasst,
wobei dieser Transponder Speichermittel (18) aufweist, die einen segmentierten Speicherraum (180) umfassen, um Anwendungsdaten (APPL. DATA i) für mehrere verschiedene Anwendungen (APPL. i) aufzunehmen,
**dadurch gekennzeichnet, dass** die Leseeinheit (5) Mittel umfasst, um die Anwendungsdaten, die zu wenigstens einer ersten Anwendung gehören und in dem Speicherraum (180) des Transponders gespeichert sind, vorübergehend auszuladen, um wenigstens einen Teil des Speicherraums (180) zu leeren, und um andere Anwendungsdaten, die zu wenigstens einer zweiten Anwendung gehören, vorübergehend in den geleerten Abschnitt des Speicherraums (180) des Transponders zu laden.

2. System für die elektronische Identifizierung nach Anspruch 1, **dadurch gekennzeichnet, dass** in die Leseeinheit (5) und/oder in die Speichermittel (18) des Transponders (1) ein Zustandsidentifizierer (STATUS) eingetragen ist, der angibt, dass eine temporäre Übertragung von Anwendungsdaten (APPL. DATA i) ausgeführt worden ist, wobei dieser Zustandsidentifizierer bei jedem Austausch von Anwendungsdaten zwischen der Leseeinheit und dem Transponder modifiziert wird.

3. System für die elektronische Identifizierung nach Anspruch 2, **dadurch gekennzeichnet, dass** der Zustandsidentifizierer (STATUS) wenigstens in die Leseeinheit (5) eingetragen ist und wenigstens eine Angabe einer Identifizierungsnummer (DEVICE SERIAL NUMBER) des Transponders, mit dem die Anwendungsdaten ausgetauscht worden sind, und eventuell eine Angabe des Zeitpunkts, zu dem diese Anwendungsdaten ausgetauscht worden sind, enthält.

4. System für die elektronische Identifizierung nach einem der Ansprüche 1 bis 3, **dadurch gekennzeichnet, dass** das Ausladen der Anwendungsdaten, die zu der ersten Anwendung gehören, und das Laden der Anwendungsdaten, die zu der zweiten Anwendung gehören, vor dem Eintritt des Transponders in einen begrenzten Raum erfolgen, wobei die zu der ersten Anwendung gehörenden Anwendungsdaten erneut in den Speicherraum des Transponders geladen werden, wenn dieser Transponder diesen begrenzten Raum verlässt.

5. System für die elektronische Identifizierung nach einem der vorhergehenden Ansprüche, **dadurch gekennzeichnet, dass** die Anwendungsdaten (APPL. DATA i) in den Speichermitteln des Transponders in verschlüsselter Form gespeichert sind und dass die zu der ersten Anwendung gehörenden Anwendungsdaten, die aus dem Transponder ausgeladen werden, in verschlüsselter oder nicht verschlüsselter Form in der Leseeinheit oder in einer dieser Leseeinheit zugeordneten Speichervorrichtung gespeichert sind.

6. System für die elektronische Identifizierung nach einem der vorhergehenden Ansprüche, **dadurch gekennzeichnet, dass** der Speicherraum (180) der Speichermittel (18) in mehrere Speichersegmente (181, 182, 183, 184), in denen die jeweiligen Anwendungsdaten (APPL. DATA) gespeichert sind, und in ein weiteres Speichersegment (187), in dem die Verzeichnisdaten (DIRECTORY), die eine Angabe jeder in dem Transponder gespeicherten Anwendung enthalten, gespeichert sind, unterteilt ist, wobei diese Verzeichnisdaten jeweilige Identifizierer der verschiedenen Anwendungen (APPL. IDENTIFIER), die jeweils einer entsprechenden, in dem Transponder gespeicherten Anwendung zugeordnet sind, enthalten,
und dass der Anwendungsidentifizierer der ersten Anwendung ebenfalls ausgeladen und in der Leseeinheit oder in der dieser Leseeinheit zugeordneten Speichervorrichtung gespeichert wird.

7. System für die elektronische Identifizierung nach Anspruch 6, **dadurch gekennzeichnet, dass** der Speicherraum (180) außerdem ein Speichersegment (185) umfasst, das Daten (APPL. VALIDITY) bezüglich einer Gültigkeitsdauer der Anwendungsdaten, die zu der wenigstens ersten Anwendung gehören, enthält, und dass die Leseeinheit (5) Taktmittel umfasst, um den Ablauf der Gültigkeit der Anwendungsdaten der ersten Anwendung zu bestimmen und um in dem Fall, in dem die Gültigkeit dieser Anwendungsdaten abgelaufen ist, eine Leerung des entsprechenden Speicherabschnitts in dem Speicherraum (180) der Speichermittel (18) des Transponders zu erlauben.

8. System für die elektronische Identifizierung nach einem der vorhergehenden Ansprüche, **dadurch gekennzeichnet, dass** die Leseeinheit (5) an ein lokales Netz oder an ein Ferndatennetz (800) wie etwa das Internet angeschlossen ist, um den Zugriff auf in einem Server (85) des Netzes gespeicherte Daten zuzulassen, und dass die Anwendungsdaten, die zu der ersten Anwendung gehören und aus dem Transponder ausgeladen werden, vorübergehend in dem Server (85) gespeichert werden.

9. System für die elektronische Identifizierung nach Anspruch 8, **dadurch gekennzeichnet, dass** der Server mit einer zusätzlichen Einheit (5*) ausgerüstet ist, die Funktionalitäten besitzt, die zu jenen der Leseeinheit (5) analog sind, wobei diese zusätzliche Einheit (5*) und die Leseeinheit (5) so beschaffen sind, dass sie sich gegenseitig authentifizieren.

10. Verfahren für das Management von Daten in einem System für die kontaktlose elektronische Identifizierung, das wenigstens eine Leseeinheit (5) und wenigstens einen Informationsträger oder Transponder (1), der von der Leseeinheit (5) abgefragt werden kann, umfasst,
wobei dieser Transponder Speichermittel (18) aufweist, die einen segmentierten Speicherraum (180) umfassen, um Anwendungsdaten (APPL. DATA i) bezüglich mehrerer verschiedener Anwendungen (APPL. i) aufzunehmen,
**dadurch gekennzeichnet, dass** das Verfahren die folgenden Schritte umfasst:
- vorübergehendes Ausladen der Anwendungsdaten, die zu einer ersten Anwendung gehören und in dem Speicherraum (180) des Transponders gespeichert sind, um wenigstens einen Teil des Speicherraums (180) zu leeren; und
- vorübergehendes Laden von anderen Anwendungsdaten, die zu einer zweiten Anwendung gehören, in den geleerten Teil des Speicherraums (180) des Transponders.

11. Verfahren nach Anspruch 10, **dadurch gekennzeichnet, dass** es außerdem einen Schritt umfasst, der darin besteht, einen Zustandsidentifizierer (STATUS) zu erzeugen und aufzuzeichnen, der angibt, dass eine temporäre Übertragung von Anwendungsdaten zwischen der Leseeinheit und dem Transponder erfolgt ist, wobei dieser Zustandsidentifizierer bei jedem Austausch von Anwendungsdaten zwischen der Leseeinheit und dem Transponder modifiziert wird.

12. Verfahren nach Anspruch 11, **dadurch gekennzeichnet, dass** der Zustandsidentifizierer (STATUS) in die Leseeinheit und/oder in die Speichermittel des Transponders eingetragen wird.

13. Verfahren nach Anspruch 11 oder 12, **dadurch gekennzeichnet, dass** der Zustandsidentifizierer (STATUS) wenigstens in die Leseeinheit eingetragen wird und wenigstens eine Angabe der Identifizierungsnummer (DEVICE SERIAL NUMBER) des Transponders, mit dem die Anwendungsdaten ausgetauscht worden sind, sowie eventuell eine Angabe des Zeitpunkts, zu dem diese Anwendungsdaten ausgetauscht worden sind, enthält.

14. Verfahren nach einem der Ansprüche 10 bis 13, **dadurch gekennzeichnet, dass** das Ausladen der zu der ersten Anwendung gehörenden Anwendungsdaten und das Laden der zu der zweiten Anwendung gehörenden Anwendungsdaten vor dem Eintritt des Transponders in einen begrenzten Raum erfolgen, wobei die zu der ersten Anwendung gehörenden Anwendungsdaten erneut in den Speicherraum des Transponders geladen werden, wenn dieser Transponder diesen begrenzten Raum verlässt.

15. Verfahren nach einem der Ansprüche 10 bis 14, **dadurch gekennzeichnet, dass** die Anwendungsdaten (APPL. DATA i) in den Speichermitteln des Transponders in verschlüsselter Form gespeichert werden und dass die zu der ersten Anwendung gehörenden Anwendungsdaten, die aus dem Transponder ausgeladen werden, in verschlüsselter oder nicht verschlüsselter Form in der Leseeinheit oder in einer dieser Leseeinheit zugeordneten Speichervorrichtung gespeichert werden.

16. Verfahren nach einem der Ansprüche 10 bis 15, **dadurch gekennzeichnet, dass** dieser Speicherraum (180) der Speichermittel (18) in mehrere Speichersegmente (181, 182, 183, 184) zum Speichern der jeweiligen Anwendungsdaten (APPL. DATA i) sowie in ein zusätzliches Speichersegment (187) zum Speichern von Verzeichnisdaten (DIRECTORY), die eine Angabe jeder in den Transponder gespeicherten Anwendung enthalten, unterteilt ist, wobei diese Verzeichnisdaten jeweilige Identifizierer der verschiedenen Anwendungen (APPL. IDENTIFIER), die jeweils einer entsprechenden, in dem Transponder gespeicherten Anwendung zugeordnet sind, enthalten,
und dass der Anwendungsidentifizierer der ersten Anwendung ebenfalls ausgeladen und in der Leseeinheit oder in der dieser Leseeinheit zugeordneten Speichervorrichtung gespeichert wird.

17. Verfahren nach Anspruch 16, **dadurch gekennzeichnet, dass** der Speicherraum (180) außerdem ein Speichersegment (185) umfasst, das Daten (APPL. VALIDITY) bezüglich einer Gültigkeitsdauer der Anwendungsdaten, die zu der wenigstens ersten Anwendung gehören, enthält, wobei dieses Verfahren die folgenden anfänglichen Schritte umfasst:
- Verifizieren des Ablauf der Gültigkeit der Anwendungsdaten der ersten Anwendung; und
- falls die Gültigkeit dieser Anwendungsdaten abgelaufen ist, Entfernen der Anwendungsdaten dieser ersten Anwendung, um den entsprechenden Speicherteil des Speicherraums der Speichermittel (18) des Transponders zu leeren.
